(19) **Europäisches Patentamt / European Patent Office / Office européen des brevets**

(11) **EP 4 397 513 A1**

(12) **DEMANDE DE BREVET EUROPEEN**

(43) Date de publication:
**10.07.2024 Bulletin 2024/28**

(21) Numéro de dépôt: **23202908.2**

(22) Date de dépôt: **11.10.2023**

(51) Classification Internationale des Brevets (IPC):
**B60D 1/62** (2006.01)  **B62D 7/15** (2006.01)
**G08G 1/16** (2006.01)  **B62D 13/04** (2006.01)
**B62D 13/00** (2006.01)

(52) Classification Coopérative des Brevets (CPC):
**B62D 13/04; B60D 1/02; B60D 1/145; B60D 1/62; B62D 7/159; G08G 1/168**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **05.01.2023 FR 2300138**

(71) Demandeur: **SC OPTIMA**
**62620 Ruitz (FR)**

(72) Inventeurs:
• **Houssard, Olivier**
  **62232 Fouquières-les-Béthune (FR)**
• **Fruleux, Nicolas**
  **62172 Bouvigny Boyeffles (FR)**

(74) Mandataire: **RVDB**
**85 Place Marmottan**
**BP 30247**
**62405 Béthune Cedex (FR)**

(54) **PROCÉDÉ ET SYSTÈME DE GUIDAGE D'ESSIEU D'UN VÉHICULE TRACTÉ SUR LA TRAJECTOIRE D'UN VÉHICULE TRACTEUR**

(57) La présente invention concerne un procédé et un système de guidage trace dans trace d'un essieu (14) d'un véhicule tracté (10) par un véhicule tracteur (11), ledit système comprenant un premier moyen de mesure de cap (12) destiné à être fixé sur le véhicule tracté (10) et un deuxième moyen de mesure de cap (13) destiné à être fixé sur le véhicule tracteur (11). A cet effet, des moyens informatiques reçoivent des premières données de variation angulaire desdits moyens de mesure de cap (12, 13), déterminent un angle formé entre le véhicule tracteur (11) et le véhicule tracté (10), calculent un angle de guidage dudit essieu (14) et génèrent un guidage dudit essieu (14) en fonction dudit angle de guidage, lesdits moyens de mesure de cap (12, 13) correspondant chacun à un gyroscope et/ou à un capteur de position par géolocalisation.

[Fig.4]

EP 4 397 513 A1

**Description**

*Domaine technique*

La présente invention concerne un procédé et un dispositif pour le guidage d'un véhicule tracté (par exemple une remorque directrice) sur la trajectoire suivie par un véhicule tracteur. Bien que plus particulièrement mis au point pour le cas où l'on a affaire à un véritable attelage, comprenant un véhicule tracteur disposant lui-même d'un essieu directeur et d'une remorque, l'invention concerne également le cas d'un véhicule dont les essieux avant et arrière sont directeurs, ou encore le cas d'un véhicule muni d'un timon articulé.

L'invention concerne également un véhicule muni d'un tel dispositif de guidage.

L'invention a été particulièrement développée dans le cadre des engins à usage agricole. Bien évidemment, on comprendra ici que d'autres applications pour d'autres engins, notamment dans le secteur de la construction, sont également envisageables dans le cadre de la présente invention.

*Art antérieur*

En effet, lors du passage dans un champ d'un tracteur auquel est attelée une remorque, plusieurs problèmes peuvent se poser.

Tout d'abord, le passage répété des roues sur les plantes finit par les écraser et les détruire, ce qui entraîne une perte de rendement. Il est donc primordial que la trace du passage des roues de l'attelage soit la plus petite possible et notamment, que les roues de la remorque passent au même endroit que les roues du tracteur.

Un autre désagrément que l'on rencontre provient du fait que dans les virages, l'engin remorqué à tendance à couper la trajectoire suivie initialement par le véhicule tracteur, ce qui augmente la surface d'écrasement. De plus, si l'engin remorqué est un pulvérisateur, certaines zones du champ risquent de recevoir une plus forte dose du produit pulvérisé tandis que d'autre seront sous-traitées ou non traitées, du fait du délai nécessaire au rétablissement manuel de la trajectoire.

Cela entraîne donc des sur ou sous dosages de produit, ce qui peut être particulièrement préjudiciable. En effet, le traitement perd de son efficacité, ce qui entraîne une augmentation des coûts du traitement et un risque de diminution du rendement.

Par exemple, si le produit pulvérisé est un fongicide, les zones sous-traitées risquent de voir se développer la maladie contre laquelle un traitement avait été prévu et par suite de constituer un foyer susceptible de contaminer d'autres plantes, une fois que l'intensité du traitement s'est atténuée.

Le problème de sur ou sous-dosage existe pour d'autres types de remorques. Il s'agira par exemple d'un épandeur à fumier ou à lisier ou de tout autre engin dont la fonction est de répandre un produit sur un champ.

On connaît dans l'art antérieur plusieurs solutions pour le guidage d'essieu.

Ainsi, le document EP1081020 divulgue une solution de guidage d'une remorque qui est attelée de manière articulée à une chape d'attelage à l'arrière d'un tracteur à l'aide d'un timon coudé ou d'un timon directionnel à fusée, l'articulation du timon étant commandée par l'actionneur qui est excité par un dispositif de réglage auquel sont conduits un signal de mesure d'angle côté tracteur et un signal de mesure d'angle côté remorque, l'angle étant régulé de sorte que la remorque suive le tracteur aussi exactement que possible, lors de la prise de tournants.

Dans ce document, le dispositif de réglage est relié, côté entrée, à un générateur de signaux de trajet et, sur la base du signal de celui-ci, ainsi que des signaux de mesure d'angle, un angle de consigne de l'articulation du timon est calculé, chaque fois, pour sa régulation par l'acteur, de sorte que chaque point d'intersection d'une ligne médiane du tracteur et d'une ligne médiane de la remorque soit pris en considération en tant que point d'articulation virtuel (A) équidistant des points centraux d'un axe du tracteur et d'un axe de la remorque.

Le demandeur soulève de nombreux inconvénients dont le fait de procéder à un étalonnage régulier et de fonctionner uniquement à l'intérieur d'une plage de vitesse entre 4 km/h et 20 km/h comme il l'est indiqué explicitement dans la notice d'utilisation fournie par la société Muller Electronik.

On connaît également le document EP1449745 appartenant au Demandeur.

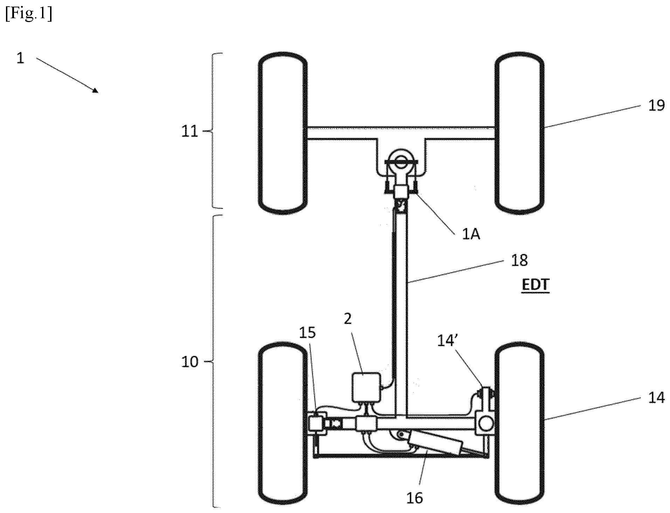

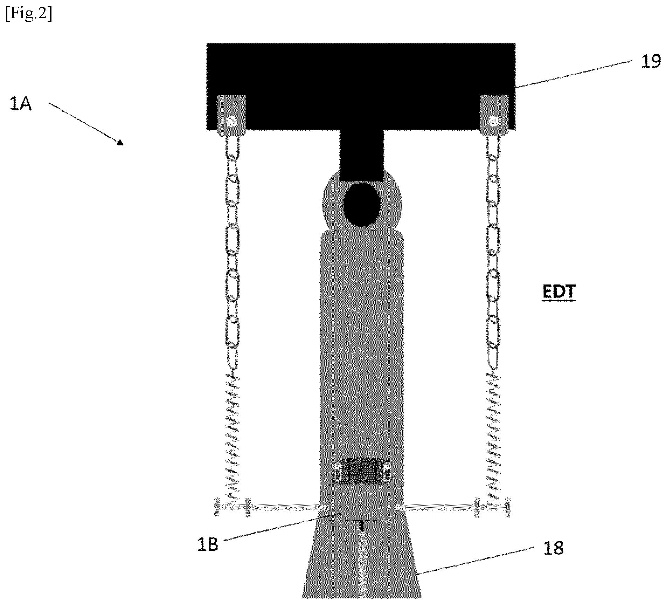

Les figures [Fig.1] et [Fig.2] illustrent la solution proposée dans ce document.

Ainsi, comme on peut le comprendre sur ces figures, il est prévu dans ce document la mise en oeuvre de capteurs avec une tringlerie 1A (système de chaînettes-ressorts) comprenant un capteur angulaire de position 1B pour calculer l'angle de braquage avant du véhicule tracteur 11 ainsi que l'angle de braquage arrière de l'essieu 14 remorqué.

Un tel capteur reste cependant rudimentaire.

Même si le système fonctionne correctement, il est par ailleurs sujet à des détériorations fréquentes, notamment à cause des végétaux dans les champs qui viennent se prendre dans cette tringlerie.

Le Demandeur soumet que, pour ces raisons, les solutions de guidage « trace dans trace » ne sont pas pleinement satisfaisantes.

## EP 4 397 513 A1

*Résumé de l'invention*

La présente invention vise à améliorer la situation décrite ci-dessus

La présente invention vise notamment à remédier à au moins l'un des différents problèmes techniques mentionnés ci-dessus en proposant un procédé et un système de guidage d'essieu effectuant un guidage précis et fiable, sans requérir l'emploi de capteurs vulnérables à l'environnement extérieur.

Selon un premier aspect, l'objet de la présente invention concerne un procédé de guidage d'un essieu d'un véhicule tracté par un véhicule tracteur, le procédé étant mis en oeuvre par un calculateur, le procédé comprenant les étapes suivantes :

- réception de premières données représentatives d'une première variation angulaire d'un premier moyen de mesure de cap fixé sur le véhicule tracté et d'une deuxième variation angulaire d'un deuxième moyen de mesure de cap fixé sur le véhicule tracteur, depuis le premier moyen de mesure de cap et le deuxième moyen de mesure de cap ;
- détermination d'un angle formé entre le véhicule tracteur et le véhicule tracté en fonction des premières données ;
- calcul d'un angle de guidage de l'essieu en fonction de l'angle formé ; et
- guidage de l'essieu en fonction de l'angle de guidage,

le premier moyen de mesure de cap et le deuxième moyen de mesure de cap correspondant chacun à un gyroscope et/ou à un capteur de position par géolocalisation (aussi appelé capteur GPS).

En d'autres termes, l'angle entre le véhicule tracteur et le véhicule tracté est déterminé à partir de l'évolution de la position angulaire du véhicule tracté et du véhicule tracteur, telles que mesurées par le premier moyen de mesure de cap et le deuxième moyen de mesure de cap. On comprend ici que le premier moyen de mesure de cap et le deuxième moyen de mesure de cap peuvent être configurés pour renvoyer directement une information de variation angulaire ou encore une information représentative d'un premier et/ou d'un deuxième cap, l'évolution du premier et du deuxième cap au cours du temps correspondant respectivement à la première et à la deuxième variation angulaire. On comprend en outre que l'angle de guidage de l'essieu est calculé de manière à permettre un guidage « trace dans trace » du véhicule tracté vis-à-vis du véhicule tracteur, c'est-à-dire que l'essieu du véhicule tracé est guidé de manière à reproduire la trajectoire du véhicule tracteur.

Ainsi, la présente invention propose un système de guidage innovant mettant en oeuvre deux moyens de mesure de cap, par exemple deux gyroscopes, en lieu et place du capteur angulaire avant comprenant le système de tringlerie proposé dans l'art antérieur (chainettes-ressorts). Ce système de guidage innovant s'intègre par exemple à l'intérieur d'un système de guidage connu de l'art antérieur, par exemple le système de guidage du document EP1449745B1 comprenant un échantillonnage d'une trajectoire du véhicule tracteur, la détermination de l'angle formé s'effectuant à chaque fois que le véhicule tracteur (ou le véhicule tracté) parcourt une distance prédéterminée et l'angle formé venant se substituer à un angle de braquage avant pour le calcul d'un angle de correction correspondant à l'angle de guidage selon l'invention.

Avantageusement, selon l'invention, il n'existe aucune liaison mécanique des capteurs entre le tracteur et le véhicule remorqué, l'emploi de gyroscopes et/ou de capteurs de position par géolocalisation ne requérant pas de liaison mécanique. Ce procédé est ainsi moins vulnérable aux détériorations, en particulier dans un environnement agricole.

De plus, la présente invention ne nécessite aucun étalonnage du système de gyroscope.

Grâce à la présente invention, le véhicule tracté peut être guidé « trace dans trace », c'est-à-dire de sorte que les roues du véhicule tracté passent au même endroit que celles du véhicule tracteur, minimisant la surface d'écrasement, et que la trajectoire du véhicule tracté reproduise celle du véhicule tracteur, permettant de contrôler cette trajectoire, en particulier lorsque le véhicule tracté correspond à un pulvérisateur ou à un épandeur. Le guidage est en outre effectué à l'aide de capteurs fiables et précis, ne requérant pas d'exposition à l'environnement extérieur ou de vitesse minimale.

Dans un mode de réalisation avantageux de l'invention, le procédé comprend en outre une réception de deuxièmes données représentatives d'un angle de braquage de l'essieu depuis un moyen de mesure angulaire associé à l'essieu, l'angle de guidage étant calculé en outre en fonction des deuxièmes données.

On comprend ici que, dans ce mode de réalisation, l'angle de braquage de l'essieu correspond à un premier angle de braquage et l'angle formé à un deuxième angle de braquage distinct du premier angle de braquage, c'est-à-dire à l'angle de braquage du véhicule tracteur. En d'autres termes, le procédé comprend l'obtention, d'une part, d'un premier angle de braquage correspondant au braquage des roues de l'essieu du véhicule tracté, d'autre part, d'un deuxième angle de braquage entre le véhicule tracteur et le véhicule tracté. L'angle de guidage de l'essieu peut ainsi être calculé en suivant la méthode décrite dans le document EP1449745B1 et connue de l'homme du métier, l'angle formé correspondant à un angle de braquage avant et l'angle de braquage de l'essieu à un angle de braquage arrière. L'angle de guidage correspond donc ici à un angle de correction de l'angle de braquage arrière.

On comprend en outre que la mesure angulaire de l'essieu peut être effectuée sans difficulté, par exemple à l'aide d'un capteur angulaire de position, sans nécessiter l'emploi de deux gyroscopes ou capteurs de position par géolocalisation selon l'invention ou d'un système de tringlerie selon l'art antérieur.

Dans un mode de réalisation particulier, le procédé comprend en outre les étapes suivantes :

- détection d'une nullité simultanée de la première variation angulaire et de la deuxième variation angulaire en fonction des premières données ; et
- attribution d'une position de référence entre le véhicule tracteur et le véhicule tracté en fonction de la nullité simultanée,

l'angle formé entre le véhicule tracteur et le véhicule tracté étant déterminé en outre en fonction de la position de référence.

On comprend ici que l'établissement d'une position de référence s'effectue lorsque le premier moyen de mesure de cap et le deuxième moyen de mesure de cap n'enregistrent aucune variation angulaire, c'est-à-dire que le véhicule tracteur et le véhicule tracté circulent en ligne droite durant un certain temps. Toute détermination ultérieure de l'angle formé entre le véhicule tracteur et le véhicule tracté peut ainsi s'effectuer en tenant compte de la variation angulaire des moyens de mesure de cap depuis cette position de référence. Cette conception permet ainsi de recalibrer régulièrement le procédé à chaque fois que le véhicule tracteur et le véhicule tracté circulent sur une ligne droite, évitant toute dérive sur le long terme.

Dans un mode de réalisation additionnel, le procédé comprend en outre une réception de troisièmes données représentatives d'une inclinaison du véhicule tracté, depuis un inclinomètre associé au véhicule tracté, l'angle de guidage étant calculé en outre en fonction des troisièmes données.

En d'autres termes, le procédé tient compte de la possibilité d'une circulation sur une voie en pente, laquelle résulte en une inclinaison du véhicule tracté, pour corriger l'angle de guidage à appliquer sur l'essieu du véhicule tracté.

Dans un mode de réalisation supplémentaire, le procédé comprend en outre une réception d'informations représentatives de vitesse du véhicule tracté et du véhicule tracteur, et l'angle formé est déterminé en outre en fonction des informations représentatives de vitesse.

Les informations représentatives de vitesse correspondent par exemple à une vitesse longitudinale du véhicule tracteur et du véhicule tracté, c'est-à-dire une vitesse selon un axe orienté vers une direction avant du véhicule tracteur et/ou tracté, en fonction de leur orientation. L'angle formé entre le véhicule tracté et le véhicule tracteur est donc déterminé conjointement à partir des premières données et des informations représentatives de vitesse. Dans encore un mode de réalisation le guidage correspond à un contrôle d'un vérin associé à l'essieu du véhicule tracté.

On comprend ici que le vérin est associé à l'essieu de manière à transformer un déplacement longitudinal du vérin en un lacet des roues de l'essieu. Le guidage de l'essieu comprend ainsi une détermination de la course à faire effectuer par le vérin pour atteindre l'angle de guidage.

Selon un deuxième aspect, la présente invention concerne un dispositif de guidage d'un essieu d'un véhicule tracté par un véhicule tracteur, le dispositif comprenant une mémoire associée à un processeur configuré pour la mise en oeuvre des étapes du procédé selon le premier aspect de la présente invention.

Selon un troisième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Selon un quatrième aspect, la présente invention concerne un support d'enregistrement lisible par un ordinateur sur lequel est enregistré un programme d'ordinateur comprenant des instructions pour l'exécution des étapes du procédé selon le premier aspect de l'invention.

Selon un cinquième aspect, la présente invention concerne un système de guidage d'un essieu d'un véhicule tracté par un véhicule tracteur, ledit système comprenant :

- un premier moyen de mesure de cap destiné à être fixé sur le véhicule tracté ; et
- un deuxième moyen de mesure de cap destiné à être fixé sur le véhicule tracteur,

le système comprenant en outre un calculateur comprenant :

- une première unité de balise configurée pour recevoir des premières données représentatives d'une première variation angulaire du premier moyen de mesure de cap et d'une deuxième variation angulaire du deuxième moyen de mesure de cap, à partir du premier moyen de mesure de cap et du deuxième moyen de mesure de cap ;
- une unité de traitement configurée pour déterminer un angle formé entre le véhicule tracteur et le véhicule tracté en fonction des premières données ;
- des moyens de calcul configurés pour calculer un angle de guidage de l'essieu en fonction de l'angle formé ; et

un circuit de contrôle configuré pour générer un guidage de l'essieu en fonction de l'angle de guidage, le premier moyen de mesure de cap et le deuxième moyen de mesure de cap correspondant chacun à un gyroscope et/ou à un capteur de position par géolocalisation.

En d'autres termes, le système de guidage comprend des moyens informatiques configurés pour la mise en oeuvre des étapes du procédé selon le premier aspect de l'invention.

Dans un mode de mise en oeuvre, le calculateur comprend en outre une deuxième unité de balise configurée pour recevoir des deuxièmes données représentatives d'un angle de braquage de l'essieu depuis un moyen de mesure angulaire associé à l'essieu, les moyens de calcul étant configurés pour calculer l'angle de guidage en outre en fonction des deuxièmes données.

De préférence, le moyen de mesure angulaire correspond à un capteur angulaire destiné à être fixé sur l'essieu du véhicule tracté.

Selon d'autres variantes, on utilise par exemple la vitesse GPS du tracteur/pulvérisateur, c'est-à-dire du véhicule tracteur et/ou tracté, ou un capteur associé à une roue du véhicule tracté. On prévoit par exemple une pluralité de capteurs formant les moyens de mesure angulaire, les capteurs redondants correspondant à un ou des capteurs de secours.

Avantageusement, le premier moyen de mesure de cap est destiné à être fixé sur une partie non suspendue d'un châssis arrière du véhicule tracté.

Le premier moyen de mesure de cap est par exemple installé sur la partie non suspendue du châssis arrière d'un véhicule tracté de type pulvérisateur. L'homme du métier comprend ici que cette partie correspond à la position la plus stable du véhicule tracté, permettant d'assurer une mesure précise de la part du premier moyen de mesure de cap.

Le concept sous-jacent à la présente invention est de :

- mesurer la variation angulaire du deuxième moyen de mesure de cap, par exemple un gyroscope dit tracteur, et celle du premier moyen de mesure de cap, par exemple un gyroscope dit pulvérisateur, et
- déterminer, de l'un par rapport à l'autre en temps réel, l'angle formé entre le tracteur et la flèche du pulvérisateur, c'est-à-dire la partie allongée du véhicule tracté venant s'accrocher au véhicule tracteur.

Dans encore un mode de mise en oeuvre, le calculateur comprend en outre :

- des moyens de détection d'une nullité simultanée de la première variation angulaire et de la deuxième variation angulaire en fonction des premières données ; et
- des moyens d'attribution d'une position de référence entre le véhicule tracteur et le véhicule tracté en fonction de la nullité simultanée,

l'unité de traitement étant configurée pour déterminer l'angle formé entre le véhicule tracteur et le véhicule tracté en outre en fonction de la position de référence.

On comprend ici que l'avantage de la solution proposée, en dehors bien sûr du guidage trace dans trace quelle que soit la vitesse, est la recalibration automatique des moyens de mesure de cap.

En effet, un moyen de mesure de cap, par exemple un gyroscope, mesure une variation angulaire. Ainsi, le système selon la présente invention échantillonne chaque variation angulaire de l'un et l'autre des moyens de mesure de cap selon une formule déterminée et le convertit en un angle, dit angle formé ou encore angle avant.

La difficulté demeure dans la précision du moyen de mesure de cap à transmettre des variation angulaires, positives et négatives, laquelle induit, sans recalibration, des erreurs de mesures qui se cumulent. En particulier, un moyen de mesure de cap de type gyroscope ne dispose d'aucune référence extérieure par rapport à un capteur GPS, et est donc d'autant plus susceptible à l'accumulation d'erreurs.

Sans recalibration, le système peut se décaler de plusieurs degrés rapidement et fausser le guidage d'essieux.

Pour remédier à ce problème, il est souhaitable de déterminer de façon périodique si possible le « zéro degré » de l'angle entre le pulvérisateur et le tracteur.

Pour ce faire, le principe du système est de détecter une variation angulaire nulle, sur les deux moyens de mesure de cap, simultanément. Si tel est le cas, cela signifie que l'ensemble tracteur - outil trainé, dans l'exemple le pulvérisateur, sont alignés et se dirigent en ligne droite.

Le système intègre alors toute nouvelle variation angulaire à partir du nouveau point de référence « 0 degré » de l'angle formé par l'ensemble tracteur - pulvérisateur, c'est-à-dire ici la position de référence.

Dans un mode de mise en oeuvre supplémentaire, le système comprend en outre un inclinomètre destiné à être fixé sur le véhicule tracté, et le calculateur comprend une troisième unité de balise configurée pour recevoir des troisièmes données représentatives d'une inclinaison du véhicule tracté, depuis l'inclinomètre, les moyens de calcul étant configurés pour calculer l'angle de guidage en outre en fonction des troisièmes données.

On comprend ici que cette variante permet de corriger les devers. A cet effet, on prévoit par exemple que le capteur installé sur le véhicule tracté, par exemple un pulvérisateur, est équipé à la fois du premier gyroscope et d'un inclinomètre.

De fait, il est possible de mesurer l'inclinaison dans une pente, à partir de l'inclinomètre, lorsque le pulvérisateur longe la pente, et d'apporter des corrections à l'algorithme de guidage de l'essieu suiveur, c'est-à-dire l'essieu du véhicule tracté, lorsque la commande de l'essieu suiveur est pilotée mais que ce dernier ne réagit pas en termes de mouvement pour rejoindre la trace, notamment en raison d'un glissement causé par la pente.

Le principe est d'alors appliquer une correction angulaire supérieure, mais toutefois limitée pour éviter un braquage trop important des roues par rapport à la trajectoire, permettant ainsi au pulvérisateur de retrouver la trace.

Dans encore un mode de mise en oeuvre, le système comprend en outre une quatrième unité de balise configurée pour recevoir des informations représentatives de vitesse du véhicule tracté et du véhicule tracteur, l'unité de traitement étant configurée pour déterminer l'angle formé en outre en fonction des informations représentatives de vitesse.

Dans un mode de mise en oeuvre additionnel, le premier moyen de mesure de cap est destiné à être fixé sur une flèche du véhicule tracté, et le deuxième moyen de mesure de cap est destiné à être fixé sur un essieu arrière du véhicule tracteur.

On comprend ici que l'assemblage entre le véhicule tracteur et le véhicule tracté s'effectue par fixation de la flèche du véhicule tracté au niveau de l'essieu arrière du véhicule tracteur. Cette disposition des moyens de mesure de cap permet ainsi de déterminer plus précisément l'angle formé entre le véhicule tracteur et le véhicule tracté, c'est-à-dire l'angle au niveau de la liaison entre le véhicule tracteur et le véhicule tracté, résultant ainsi en un guidage le plus précis possible.

Dans un autre mode de mise en oeuvre pouvant être combiné avec les modes précédents, le système comprend en outre au moins un vérin destiné à être assemblé à l'essieu du véhicule tracté, le circuit de contrôle étant configuré pour contrôler le vérin.

Comme énoncé précédemment, on comprend ici que le vérin est associé à l'essieu de manière à transformer un déplacement longitudinal du vérin en un lacet des roues de l'essieu. Le circuit de contrôle est ainsi configuré pour commander le déplacement longitudinal du vérin, résultant en un guidage de l'essieu du véhicule tracté.

Selon un sixième aspect, la présente invention concerne un véhicule articulé comprenant un véhicule tracteur tractant un véhicule tracté, le véhicule tracté présentant un essieu, le véhicule articulé étant équipé d'un système selon le cinquième aspect de la présente invention pour le guidage de l'essieu.

On comprend ici que le véhicule articulé correspond par exemple à un engin agricole, par exemple un tracteur auquel est attelé un pulvérisateur ou épandeur. Selon un autre exemple, le véhicule articulé correspond à un tracteur assemblé à une semi-remorque. Selon encore un exemple de réalisation, le véhicule articulé correspond à un véhicule présentant deux essieux directeurs, le véhicule tracteur correspondant à un essieu avant et le véhicule tracté correspondant à un essieu arrière du véhicule articulé.

Ainsi, par les différentes caractéristiques techniques fonctionnelles et structurelles ci-dessus, le Demandeur propose un procédé et un système de guidage d'un essieu d'un véhicule tracté par un véhicule tracteur à usage et maintenance simplifiés, ne requérant ni l'emploi de capteurs exposés à l'environnement extérieur, ni la réalisation d'étalonnages répétés, ni une vitesse limite d'opération.

*Description des figures*

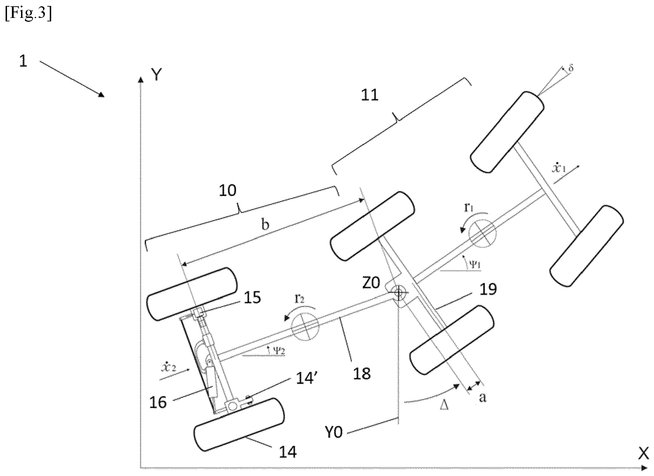

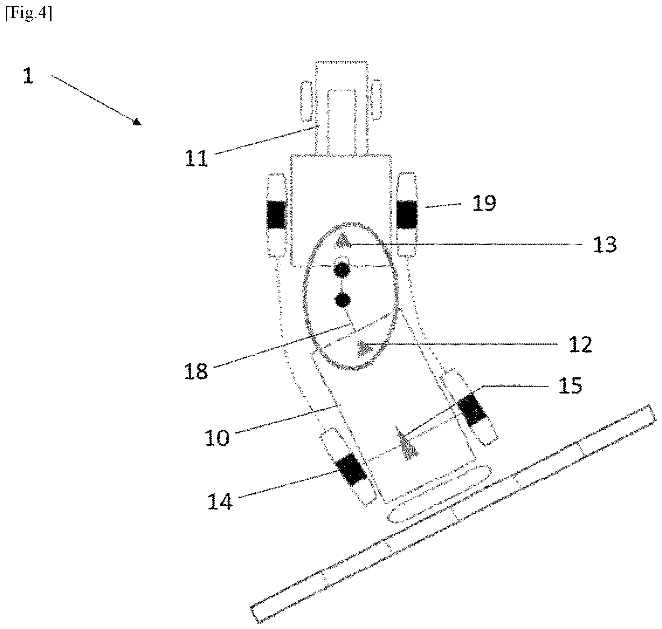

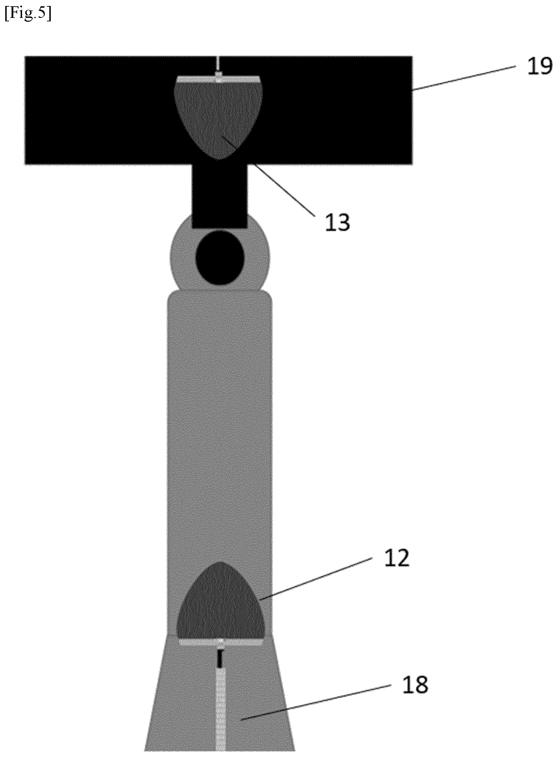

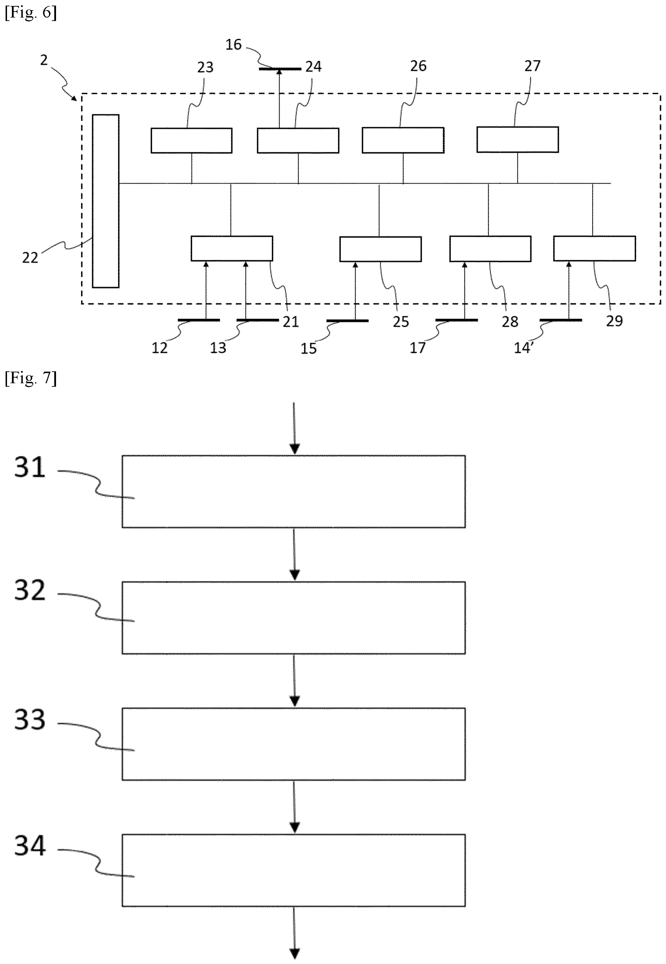

D'autres caractéristiques et avantages de la présente invention ressortiront de la description ci-dessous, en référence aux figures [Fig.1], [Fig.2], [Fig.3], [Fig.4], [Fig.5], [Fig. 6], [Fig. 7] annexées qui illustrent l'état de la technique connu ([Fig.1] et [Fig.2]) et un exemple de réalisation de la présente invention ([Fig.3], [Fig.4], [Fig.5], [Fig. 6], [Fig. 7]) dépourvu de tout caractère limitatif et sur lesquelles :

[Fig. 1]
La figure 1 représente schématiquement un véhicule articulé comprenant un système de guidage d'un essieu d'un véhicule tracté selon l'état de la technique connu ;
[Fig. 2]
La figure 2 représente schématiquement une tringlerie embarquée dans un système de guidage conforme à la figure 1 ;
[Fig. 3]
La figure 3 représente schématiquement un modèle cinématique d'un véhicule articulé comprenant un véhicule tracteur, un véhicule tracté, et un système de guidage d'un essieu du véhicule tracté selon un exemple de réalisation de la présente invention ;
[Fig. 4]
La figure 4 représente schématiquement un véhicule articulé conforme à la figure 3 ;
[Fig. 5]

La figure 5 représente schématiquement un couple de moyens de mesure de cap embarqué dans un système de guidage conforme à la figure 3 ;

[Fig. 6]

La figure 6 représente schématiquement un dispositif configuré pour guider l'essieu d'un véhicule tracté conforme à la figure 3 ; et

[Fig. 7]

La figure 7 représente schématiquement un organigramme des différentes étapes d'un procédé de guidage d'un essieu d'un véhicule tracté conforme à la figure 3.

## Description détaillée

Un procédé et un système de guidage d'un essieu d'un véhicule tracté par un véhicule tracteur vont maintenant être décrits dans ce qui va suivre en référence conjointement aux figures 1 à 7.

Comme indiqué dans le préambule de la description, les solutions actuelles de guidage d'essieu sont contraignantes et inadaptées aux conditions extérieures.

Un des objectifs de la présente invention consiste à permettre un guidage précis de l'essieu du véhicule tracté, sans vitesse limite, minimale ou maximale, et sans requérir de capteur susceptible aux détériorations extérieures.

Un des autres objectifs de la présente invention est de proposer un guidage d'essieu « Trace dans Trace », c'est-à-dire un guidage dans lequel les roues du véhicule tracté suivent une trace formée par les roues du véhicule tracteur.

Ceci est rendu possible dans l'exemple décrit ci-après.

Selon l'exemple des figures 3 à 5, un système de guidage d'un essieu développé dans le cadre de la présente invention est associé à un véhicule articulé 1. Le véhicule articulé 1 comprend un véhicule tracteur 11, tractant un véhicule tracté 10. Le véhicule articulé 1 correspond par exemple à un tracteur assemblé à un pulvérisateur, à un épandeur ou encore à une semi-remorque. Le véhicule tracteur 11 et le véhicule tracté 10 sont assemblés l'un à l'autre de manière à permettre une rotation du véhicule tracté 10 vis-à-vis du véhicule tracteur 11 selon un axe de rotation Z0 (figure 3). Dans cet exemple, le système de guidage d'essieu correspond ainsi à un système de guidage de l'essieu 14 du véhicule tracté 10.

Dans ce même exemple, le système comprend un premier moyen de mesure de cap 12 destiné à être fixé sur le véhicule tracté 10 et un deuxième moyen de mesure de cap 13 destiné à être fixé sur le véhicule tracteur 11. Comme illustré sur la figure 5, le premier moyen de mesure de cap 12 est par exemple fixé sur une flèche 18 du véhicule tracté 10 et le deuxième moyen de mesure de cap 13 est fixé sur un essieu arrière 19 du véhicule tracteur 11. La disposition du premier moyen de mesure de cap 12 assure en outre une position centrée latéralement du premier moyen de mesure de cap 12 sur le véhicule tracté 10, le deuxième moyen de mesure de cap 13 étant par exemple disposé selon le centre de l'essieu arrière 19.

Selon encore un exemple, le premier moyen de mesure de cap 12 est destiné à être fixé sur une partie non suspendue du châssis arrière du véhicule tracté 10, c'est-à-dire une portion mécaniquement stable du véhicule tracté 10, en particulier dans le cadre d'un véhicule tracté 10 correspondant à un engin agricole, par exemple de type pulvérisateur ou épandeur.

Les moyens de mesure de cap 12, 13 correspondent par exemple à un couple de gyroscopes ou à des capteurs de position par géolocalisation, en d'autres termes à des capteurs configurés pour renvoyer une information représentative d'une orientation dans un plan sensiblement horizontal, c'est-à-dire d'un cap, correspondant à une position angulaire, ou d'un lacet, correspondant à une vitesse angulaire.

En combinaison du couple de moyens de mesure de cap 12, 13, le système de guidage comprend également des moyens informatiques configurés pour la mise en oeuvre d'un procédé de guidage de l'essieu 14, par exemple le procédé de la figure 7. Comme illustré dans la figure 6, de tels moyens informatiques sont par exemple regroupés avantageusement dans un dispositif électronique, par exemple un calculateur 2. Le calculateur 2 est par exemple configuré pour transmettre et recevoir des données à l'intérieur d'un réseau de communication. Les éléments du calculateur 2, individuellement ou en combinaison, peuvent être intégrés dans un unique circuit intégré, dans plusieurs circuits intégrés, et/ou dans des composants discrets. Le calculateur 2 peut être réalisé sous la forme de circuits électroniques ou de modules logiciels (ou informatiques) ou encore d'une combinaison de circuits électroniques et de modules logiciels.

Le calculateur 2 comprend un (ou plusieurs) processeur(s) configurés pour exécuter des instructions pour la réalisation des étapes du procédé et/ou pour l'exécution des instructions du ou des logiciels embarqués dans le calculateur 2. Le processeur peut inclure de la mémoire intégrée, une interface d'entrée/sortie, et différents circuits connus de l'homme du métier. Le calculateur 2 comprend en outre au moins une mémoire correspondant par exemple à une mémoire volatile et/ou non volatile et/ou comprend un dispositif de stockage de mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire du calculateur 2.

Selon une variante de réalisation, le calculateur 2 est configuré pour la mise en oeuvre d'un procédé de guidage d'essieu s'inscrivant dans un procédé plus large, par exemple un procédé de guidage connu de l'homme du métier tel que le procédé de guidage de remorque décrit par le brevet EP1449745. Les grandeurs calculées au cours du procédé selon l'invention, en particulier l'angle formé Δ ci-après, sont selon cet exemple calculées à chaque étape d'échantillonnage du procédé selon l'art antérieur. Le procédé selon l'invention peut également, selon encore un exemple, être effectué pour une position intercalaire entre deux positions successives du véhicule articulé 1, la position intercalaire et les grandeurs associées étant obtenues par interpolation.

Dans une première étape 31 du procédé de guidage, une première unité de balise 21 du calculateur 2 reçoit des premières données représentatives d'une première variation angulaire r2 du premier moyen de mesure de cap 12 et d'une deuxième variation angulaire r1 du deuxième moyen de mesure de cap 13, à partir du premier moyen de mesure de cap 12 et du deuxième moyen de mesure de cap 13. Les moyens de mesure de cap 12, 13 transmettent par exemple directement leur variation angulaire r2, r1, c'est-à-dire leur lacet, ou encore des informations représentatives d'une première position angulaire Ψ2 et d'une deuxième position angulaire 'P1, c'est-à-dire leur cap, les variations angulaires r2, r1 étant obtenues à partir des données de position angulaire Ψ2, Ψ1.

Le calculateur 2 forme par exemple un réseau de communication, par exemple un réseau de communication multiplexé, dans lequel des données sont transmises via une liaison sans fil ou filaire. Le calculateur 2 établit donc une communication entre le couple de moyens de mesure de cap 12, 13 et la première unité de balise 21 de manière à permettre l'échange de données. Ainsi, dans le cadre de la présente invention, l'acquisition de l'angle entre le véhicule tracteur 11 et le véhicule tracté 10 est assuré par le couple de moyens de mesure de cap 12, 13. Les moyens de mesure de cap 12, 13 bénéficient par exemple tous deux de la technologie BusCAN, permettant l'établissement d'une connexion facile au calculateur 2, par exemple à un boîtier de régulation de type Xenius et/ou Genius, avec qui ils sont compatibles. On comprend en outre que les moyens de mesure de cap 12, 13, correspondant alternativement à des gyroscopes ou à des capteurs de position par géolocalisation, présentent une armature robuste et compacte, en particulier en comparaison du système de tringlerie 1A de l'art antérieur. Les moyens de mesure de cap 12, 13 présentent par exemple un indice de protection IP 68 ou supérieur, pour résister à toutes conditions extérieures. Optionnellement, les moyens de mesure de cap 12, 13 sont équipés d'un témoin de fonctionnement pour visualiser l'état (On/Off) et/ou le statut de chaque moyen de mesure de cap 12, 13.

Selon un exemple d'installation de ce nouveau système de guidage, on prévoit simplement de positionner le deuxième moyen de mesure de cap 13 sur l'essieu arrière 19 du véhicule tracteur 11, et le premier moyen de mesure de cap 12 sur la flèche 18 du véhicule tracté 10, par exemple du pulvérisateur.

Les deux moyens de mesure de cap 12, 13 comprennent par exemple des aimants intégrés permettent une fixation rapide sur le véhicule tracteur 11 et le véhicule tracté 10. Néanmoins, selon une alternative, il reste possible de les fixer de manière permanente grâce à des vis.

Dans une deuxième étape 32 du procédé de guidage, une unité de traitement 22 du calculateur 2 détermine un angle formé Δ entre le véhicule tracteur 11 et le véhicule tracté 10 en fonction des premières données.

L'unité de traitement 22 comporte par exemple au moins un processeur et/ou coprocesseur configurés pour la réalisation de la deuxième étape 32. L'unité de traitement 22 peut aussi comporter de la mémoire intégrée, par exemple une mémoire flash pour enregistrer les calculs internes de la deuxième étape 32, une interface d'entrée/sortie, par exemple un bus de communication rapide pour faciliter les échanges entre le processeur et l'au moins un coprocesseur, et différents circuits connus de l'homme du métier.

En d'autres termes, la combinaison de la première variation angulaire r2 et de la deuxième variation angulaire r1 permet de calculer l'angle de braquage avant, aussi appelé angle théorique, du véhicule tracté 10. Cette opération est possible grâce à l'acquisition simultanée et en temps réel des vitesses angulaires en degré par seconde du véhicule tracteur 11 et du véhicule tracté 10.

Selon un exemple de réalisation illustré dans le modèle cinématique de la figure 3, la première variation angulaire r2 et la deuxième variation angulaire r1 sont liées par la matrice suivante :

[Math 1]

$$\begin{bmatrix} \dot{x}_2 \\ b \cdot r2 \end{bmatrix} = \begin{bmatrix} \cos \Delta & \sin \Delta \\ \sin \Delta & -\cos \Delta \end{bmatrix} \begin{bmatrix} \dot{x}_1 \\ a \cdot r_1 \end{bmatrix}$$

Avec a la distance longitudinale entre l'essieu arrière 19 du véhicule tracteur 11 et l'axe de rotation Z0, b la distance longitudinale entre l'essieu 14 du véhicule tracté 10 et l'axe de rotation Z0, $\dot{x}_2$ la vitesse longitudinale du véhicule tracté 10 et $\dot{x}_1$ la vitesse longitudinale du véhicule tracteur 11.

Comme illustré dans la figure 4, une quatrième unité de balise 29 du calculateur 2 reçoit par exemple également des informations représentatives de vitesse longitudinale $\dot{x}_1$, $\dot{x}_2$ du véhicule tracteur 11 et/ou du véhicule tracté 10 par communication filaire ou sans fil avec des capteurs de vitesse du véhicule tracteur 11 et du véhicule tracté 10, par exemple des capteurs de vitesse associées aux roues des essieux 19, 14. Selon l'exemple de la figure 3, le véhicule tracté 10 embarque ainsi un capteur de vitesse 14' associé à l'essieu 14. Le capteur de vitesse 14' correspond avantageusement à un capteur assujetti à l'essieu 14 et coopérant avec des plots magnétiques disposés à intervalles réguliers sur le pourtour d'une roue directrice de l'essieu 14, par exemple un capteur inductif détectant un ou plusieurs trous dans une surface métallique associée à la roue directrice.

Selon un autre exemple, la quatrième unité de balise 29 reçoit des informations représentatives de vitesse longitudinale $\dot{x}_1$, $\dot{x}_2$ du véhicule tracteur 11 et/ou du véhicule tracté 10 par évolution d'une position GPS du véhicule tracteur 11 et/ou du véhicule tracté 10.

On obtient donc les formules suivantes :

[Math 2]

$$r2 = \frac{\dot{x}_1}{b}\sin\Delta - \frac{a.r1}{b}\cos\Delta$$

[Math 3]

$$\dot{x}_2 = \dot{x}_1\cos\Delta + a.r1.\sin\Delta$$

[Math 4]

$$\dot{x}_1 = \frac{\dot{x}_2 - a.r1.\sin\Delta}{\cos\Delta}$$

En insérant $\dot{x}_1$ dans la formule donnant r2, on obtient :

[Math 5]

$$r2 = \frac{\tan\Delta}{b} \cdot \frac{\dot{x}_2 - a.r1.\sin\Delta}{1} - \frac{a}{b}.r1.\cos\Delta$$

[Math 6]

$$b.r2 = \dot{x}_2.\tan\Delta - a.r1.\frac{\sin^2\Delta}{\cos\Delta} - a.r1\cos\Delta$$

[Math 7]

$$b.r2 = \dot{x}_2.\tan\Delta - a.r1.\left(\frac{\sin^2\Delta}{\cos\Delta} + \cos\Delta\right)$$

[Math 8]

$$b.r2.\cos\Delta = \dot{x}_2.\sin\Delta - a.r1.(\sin^2\Delta + \cos^2\Delta)$$

[Math 9]

$$b.r2.\cos\Delta = \dot{x}_2.\sin\Delta - a.r1$$

En posant t= tan($\Delta$/2) soit $\Delta$=2. Arctan(t), on obtient les équations suivantes :

[Math 10]

$$b.\,r2\,(1 - t^2) - \dot{x}_2\,.\,2t = -a.\,r1.\,(1 + t^2)$$

[Math 11]

$$t^2.\,(a.\,r1 - b.\,r2) + t(-2\,\dot{x}_2) + (a.\,r1 + b.\,r2) = 0$$

On obtient ainsi une équation quadratique qu'il est possible de résoudre, en posant D comme le déterminant de l'équation quadratique, avec les solutions suivantes :

[Math 12]

$$D = 4.\,\dot{x}_2^2 - 4.\,(a^2.\,r1^2 - b^2.\,r2^2)$$

[Math 13]

$$t1 = \frac{\dot{x}_2 + \sqrt{D/4}}{a.\,r1 - b.\,r2}$$

[Math 14]

$$t2 = \frac{\dot{x}_2 - \sqrt{D/4}}{a.\,r1 - b.\,r2}$$

On retrouve alors l'angle formé $\Delta$ avec deux solutions possibles : $\Delta$1=2. Arctan(t1) ou $\Delta$2=2. Arctan(t2). Si $\Delta$1 appartient à l'intervalle [-$\pi$/2 ; $\pi$/2] alors on utilise le résultat $\Delta$1, sinon $\Delta$2. En d'autres termes, $\Delta$ est donné par l'une ou l'autre des solutions de l'équation quadratique obtenue, à partir des paramètres de variation angulaire r2, r1 et de vitesse longitudinale x˙$_2$, x˙$_1$.

Selon une variante, le calculateur 2 comprend également des moyens de détection 26 d'une nullité simultanée de ladite première variation angulaire r2 et de ladite deuxième variation angulaire r1 en fonction desdites premières données. En d'autres termes, les moyens de détection 26 sont configurés pour repérer un instant pour lequel la première variation angulaire r2 et la deuxième variation angulaire r1 sont toutes les deux nulles, par exemple sur un intervalle de plusieurs $\mu$s ou encore sur plusieurs itérations successives du procédé selon l'invention, ou encore une succession d'instants durant lesquels les positions angulaires $\Psi$2, $\Psi$1 sont constantes. Le calculateur 2 comprend en outre des moyens d'attribution 27 d'une position de référence Y0 entre le véhicule tracteur 11 et le véhicule tracté 10. La position de référence Y0 est ainsi attribuée en fonction de la nullité simultanée, et l'angle formé $\Delta$ est déterminé en fonction de la position de référence Y0.

En d'autres termes, la position de référence Y0 correspond à la dernière orientation pour laquelle le véhicule tracteur 11 et le véhicule tracté 10 circulent directement l'un derrière l'autre sans rotation, c'est-à-dire une orientation pour laquelle l'angle formé $\Delta$ est nécessairement nul. Ainsi, les variations angulaires r1, r2 peuvent être déterminées à partir de cette position de référence, en occultant toute donnée antérieure reçue des moyens de mesure de cap 12, 13. Cette conception permet ainsi d'éviter l'accumulation d'erreurs de mesure au cours du temps et de maintenir la fiabilité du système durant la circulation du véhicule articulé 1, en effectuant une calibration automatique du système.

Dans une troisième étape 33 du procédé de guidage, des moyens de calcul 23 du calculateur 2 calculent un angle de guidage de l'essieu 14, en fonction de l'angle formé $\Delta$ déterminé.

Les moyens de calcul 23 comprennent par exemple un ou plusieurs processeurs communiquant avec une mémoire intégrée à l'aide d'un bus de communication. Les moyens de calcul 23 et l'unité de traitement 22 sont par exemple similaires, partiellement confondus ou encore intégralement confondus.

En d'autres termes, l'essieu 14 est guidé en fonction de l'angle formé $\Delta$ entre le véhicule tracteur 11 et le véhicule tracté 10, de sorte que l'angle de guidage de l'essieu 14 permette au véhicule tracté 10 de suivre la trajectoire du véhicule tracteur 11.

Selon une variante de réalisation, une deuxième unité de balise 25 intégrée au calculateur 2, par exemple confondue avec ou distincte de la première unité de balise 21, reçoit des deuxièmes données représentatives d'un angle de braquage de l'essieu 14 depuis un moyen de mesure angulaire 15 (figures 3 et 4) associé à l'essieu 14. Le moyen de mesure angulaire 15 correspond par exemple à un capteur angulaire fixé sur l'essieu 14 du véhicule tracté 10, par exemple de manière similaire à l'art antérieur de la figure 1.

L'angle de guidage est alors calculé en outre en fonction des deuxièmes données. En d'autres termes, l'essieu 14 est guidé à la fois à partir de l'angle formé Δ entre le véhicule tracteur 11 et le véhicule tracté 10 et à partir de son angle de braquage actuel. L'angle de guidage correspond alors à une correction de l'angle de braquage de l'essieu 14.

Selon un exemple de réalisation, le guidage d'essieu proposé dans le cadre de la présente invention remplace l'ancien système de guidage d'essieu du document EP1449745 composé de deux capteurs angulaires, dont un capteur angulaire avant (1B de la figure 2) et un capteur angulaire arrière, et des chaînettes qui représentaient une réelle contrainte de par leur installation manuelle nécessaire à chaque attelage et dételage du pulvérisateur. Δ est ainsi réinjecté dans la formule du brevet EP1449745 pour le guidage d'essieu, en remplaçant l'angle mesuré par le capteur avant.

En d'autres termes, l'angle de guidage correspond à un angle de correction e, l'angle formé Δ à un angle de braquage avant selon le brevet EP1449745 et l'angle de braquage de l'essieu 14 à un angle de braquage arrière r, l'angle de correction e étant donné par la formule suivante :

[Math 15]

$$e = \text{Arctan}\left(\frac{\cos(r) + \tan(\Delta)}{K + \cos(r)}\right)$$

Où K est un paramètre fixe de longueur de châssis, par exemple un paramètre enregistré dans une mémoire des moyens de calcul 23.

Ainsi, par comparaison avec l'art antérieur illustré dans les figures 1 et 2, avec le système de guidage d'essieu selon cette variante de réalisation, on conserve le capteur angulaire arrière, en tant que moyen de mesure angulaire 15, situé sur l'essieu 14 du véhicule tracté 10, et on remplace le système de chaînettes de la tringlerie 1A par deux moyens de mesure de cap 12, 13, gyroscopes ou capteurs GPS, dont le montage est beaucoup plus simple. Le couple de moyens de mesure de cap 12, 13 s'avère également être plus robuste que l'ancien système car moins sensibles aux perturbations de la végétation environnante. En effet, chaque gyroscope ou capteur GPS peut se présenter sous la forme d'un boîtier fermé, non exposé à l'environnement extérieur. Chaque moyen de mesure de cap 12, 13 est par exemple intégré directement dans le châssis du véhicule tracté 10 et/ou du véhicule tracteur 11.

Le système de guidage selon l'invention présente également comme avantage de ne plus avoir de liaison mécanique avec le véhicule articulé 1 autre que la fixation des moyens de mesure de cap 12, 13. Le fonctionnement du guidage de l'essieu 14 ne dépend donc plus de la robustesse de la liaison mécanique des capteurs embarqués, tant que les moyens de mesure de cap 12, 13 restent maintenus en position.

Selon encore une variante de réalisation, une troisième unité de balise 28 intégrée au calculateur 2, par exemple confondue avec ou distincte de la première unité de balise 21 et/ou de la deuxième unité de balise 25, reçoit des troisièmes données représentatives d'une inclinaison du véhicule tracté 10 depuis un inclinomètre 17 (illustré uniquement en regard de la figure 6) fixé sur le véhicule tracté 10. L'angle de guidage est alors calculé en outre en fonction des troisièmes données, par exemple par combinaison des premières, deuxièmes et troisièmes données. On comprend ici que l'inclinaison du véhicule tracté 10 n'impacte pas directement l'angle formé Δ mais permet d'ajuster l'angle de guidage de manière à obtenir le comportement recherché du véhicule tracté 10, la présente de pentes impactant la trajectoire de l'essieu 14 et l'effet du guidage de l'essieu 14.

Enfin, dans une quatrième étape 34 du procédé de guidage, un circuit de contrôle 24 du calculateur 2 génère un guidage de l'essieu 14 en fonction de l'angle de guidage. En d'autres termes, le circuit de contrôle génère un ensemble d'instructions pour le contrôle d'actionneurs associés à l'essieu 14, de sorte que l'essieu 14 soit orienté selon l'angle de guidage.

Selon une variante particulière, le guidage de l'essieu 14 correspond au contrôle d'un vérin 16 assemblé à l'essieu 14. Le circuit de contrôle 24 contrôle ainsi un déplacement longitudinal du vérin 16, lequel résulte en un braquage de l'essieu 14.

On comprend en outre que, selon certains cas de figure, l'angle de guidage peut dépasser les limites de braquage de l'essieu 14, le guidage de l'essieu étant alors adapté de manière à ramener le véhicule tracté 10 dans la trajectoire du véhicule tracteur 11.

Selon encore une variante, dans laquelle le procédé selon l'invention s'intègre dans un procédé plus large de guidage tel que décrit dans le document EP1449745B1, le guidage de l'essieu 14 en fonction de l'angle de guidage est réalisé par application d'une série d'angles élémentaires de correction, la somme des angles élémentaires correspondant à l'angle de guidage. Le procédé selon l'invention peut également s'intégrer dans le procédé décrit dans le document EP1449745 de sorte que chaque angle de guidage calculé par le procédé selon l'invention corresponde à un angle élémentaire de correction selon le document EP1449745B1, le guidage de l'essieu 14 correspondant à une application successive de chacun des angles de guidage calculés.

Ainsi, on comprendra que la présente invention prévoit un procédé et un système de guidage d'un essieu d'un véhicule tracté par un véhicule tracteur, par exemple à l'intérieur d'un véhicule articulé. Un tel guidage se base avantageusement sur l'emploi conjoint de deux moyens de mesure de cap de manière à déterminer l'angle formé entre le véhicule tracté et le véhicule tracteur, permettant un suivi précis du mouvement relatif du véhicule tracté, de manière à générer une consigne exacte pour un guidage « trace dans trace » du véhicule tracté. Le guidage est ainsi précis et se fonde sur des capteurs fiables, sans vitesse minimale d'opération et protégés à l'environnement extérieur, en particulier un environnement agricole dont les végétaux sont susceptibles de détériorer les capteurs.

On comprendra que ce procédé de guidage peut s'appliquer à une variété de situations autres que le domaine agricole, pour lesquels un guidage précis de plusieurs essieux articulés peut être nécessaire, ou encore mettant en oeuvre un timon articulé dont l'angle doit être contrôlé. Il devra être observé que cette description détaillée porte sur un exemple de réalisation particulier de la présente invention, mais qu'en aucun cas cette description ne revêt un quelconque caractère limitatif à l'objet de l'invention ; bien au contraire, elle a pour objectif d'ôter toute éventuelle imprécision ou toute mauvaise interprétation des revendications qui suivent.

Bien entendu, la présente invention ne se limite pas aux exemples de réalisation décrits ci-avant mais s'étend à un procédé de guidage d'un essieu d'un véhicule tracté par un véhicule tracteur qui inclurait des étapes secondaires sans pour cela sortir de la portée de la présente invention. Il en serait de même d'un système configuré pour la mise en oeuvre d'un tel procédé.

La présente invention concerne également un véhicule articulé comprenant le système de guidage ci-dessus.

Il devra également être observé que les signes de références mis entre parenthèses dans les revendications qui suivent ne présentent en aucun cas un caractère limitatif ; ces signes ont pour seul but d'améliorer l'intelligibilité et la compréhension des revendications qui suivent ainsi que la portée de la protection recherchée.

**Revendications**

1. Procédé de guidage d'un essieu (14) d'un véhicule tracté (10) par un véhicule tracteur (11), ledit procédé étant mis en oeuvre par un calculateur (2), ledit procédé comprenant les étapes suivantes :

   - réception (31) de premières données représentatives d'une première variation angulaire (r2) d'un premier moyen de mesure de cap (12) fixé sur ledit véhicule tracté (10) et d'une deuxième variation angulaire (r1) d'un deuxième moyen de mesure de cap (13) fixé sur ledit véhicule tracteur (11), depuis ledit premier moyen de mesure de cap (12) et ledit deuxième moyen de mesure de cap (13) ;
   - détermination (32) d'un angle formé ($\Delta$) entre ledit véhicule tracteur (11) et ledit véhicule tracté (10) en fonction desdites premières données ;
   - calcul (33) d'un angle de guidage dudit essieu (14) en fonction dudit angle formé ($\Delta$) ; et
   - guidage (34) dudit essieu (14) en fonction dudit angle de guidage,

   ledit premier moyen de mesure de cap (12) et ledit deuxième moyen de mesure de cap (13) correspondant chacun à un gyroscope et/ou à un capteur de position par géolocalisation.

2. Procédé selon la revendication 1, lequel comprend en outre une réception de deuxièmes données représentatives d'un angle de braquage dudit essieu (14) depuis un moyen de mesure angulaire (15) associé audit essieu (14), ledit angle de guidage étant calculé en outre en fonction desdites deuxièmes données.

3. Procédé selon la revendication 1 ou 2, lequel comprend en outre les étapes suivantes :

   - détection d'une nullité simultanée de ladite première variation angulaire (r2) et de ladite deuxième variation angulaire (r1) en fonction desdites premières données ; et
   - attribution d'une position de référence (Y0) entre ledit véhicule tracteur (11) et ledit véhicule tracté (10) en fonction de ladite nullité simultanée,

   ledit angle formé ($\Delta$) entre ledit véhicule tracteur (11) et ledit véhicule tracté (10) étant déterminé en outre en fonction de ladite position de référence (Y0).

**4.** Procédé selon l'une des revendications 1 à 3, lequel comprend en outre une réception de troisièmes données représentatives d'une inclinaison dudit véhicule tracté (10), depuis un inclinomètre (17) associé audit véhicule tracté (10), ledit angle de guidage étant calculé en outre en fonction desdites troisièmes données.

**5.** Procédé selon l'une des revendications 1 à 4, lequel comprend en outre une réception d'informations représentatives de vitesse ($\dot{x}_1$, $\dot{x}_2$) dudit véhicule tracté (10) et dudit véhicule tracteur (11), et dans lequel ledit angle formé ($\Delta$) est déterminé en outre en fonction desdites informations représentatives de vitesse ($\dot{x}_1$, $\dot{x}_2$).

**6.** Procédé selon l'une des revendications 1 à 5, dans lequel ledit guidage (34) correspond à un contrôle d'un vérin (16) associé audit essieu (14) dudit véhicule tracté (10).

**7.** Programme d'ordinateur de guidage d'un essieu d'un véhicule tracté (10) par un véhicule tracteur (11), ledit programme comportant des instructions pour la mise en oeuvre du procédé selon l'une quelconque des revendications 1 à 6, lorsque ces instructions sont exécutées par un processeur.

**8.** Système de guidage d'un essieu (14) d'un véhicule tracté (10) par un véhicule tracteur (11), ledit système comprenant :

- un premier moyen de mesure de cap (12) destiné à être fixé sur ledit véhicule tracté (10) ; et
- un deuxième moyen de mesure de cap (13) destiné à être fixé sur ledit véhicule tracteur (11), dans lequel ledit système comprend en outre un calculateur (2) comprenant :
- une première unité de balise (21) configurée pour recevoir des premières données représentatives d'une première variation angulaire (r2) dudit premier moyen de mesure de cap (12) et d'une deuxième variation angulaire (r1) dudit deuxième moyen de mesure de cap (13), à partir dudit premier moyen de mesure de cap (12) et dudit deuxième moyen de mesure de cap (13) ;
- une unité de traitement (22) configurée pour déterminer un angle formé ($\Delta$) entre ledit véhicule tracteur (11) et ledit véhicule tracté (10) en fonction desdites premières données ;
- des moyens de calcul (23) configurés pour calculer un angle de guidage dudit essieu (14) en fonction dudit angle formé ($\Delta$) ; et
- un circuit de contrôle (24) configuré pour générer un guidage dudit essieu (14) en fonction dudit angle de guidage,

ledit premier moyen de mesure de cap (12) et ledit deuxième moyen de mesure de cap (13) correspondant chacun à un gyroscope et/ou à un capteur de position par géolocalisation.

**9.** Système selon la revendication 8, dans lequel ledit calculateur (2) comprend en outre une deuxième unité de balise (25) configurée pour recevoir des deuxièmes données représentatives d'un angle de braquage dudit essieu (14) depuis un moyen de mesure angulaire (15) associé audit essieu (14), lesdits moyens de calcul (23) étant configurés pour calculer ledit angle de guidage en outre en fonction desdites deuxièmes données.

**10.** Système selon la revendication 9, dans lequel ledit moyen de mesure angulaire (15) correspond à un capteur angulaire destiné à être fixé sur ledit essieu (14) dudit véhicule tracté (10).

**11.** Système selon l'une des revendications 8 à 10, dans lequel ledit premier moyen de mesure de cap (12) est destiné à être fixé sur une partie non suspendue d'un châssis arrière dudit véhicule tracté (10).

**12.** Système selon l'une des revendications 8 à 11, dans lequel ledit calculateur (2) comprend en outre :

- des moyens de détection (26) d'une nullité simultanée de ladite première variation angulaire (r2) et de ladite deuxième variation angulaire (r1) en fonction desdites premières données ; et
- des moyens d'attribution (27) d'une position de référence (Y0) entre ledit véhicule tracteur (11) et ledit véhicule tracté (10) en fonction de ladite nullité simultanée,

ladite unité de traitement (22) étant configurée pour déterminer ledit angle formé ($\Delta$) entre ledit véhicule tracteur (11) et ledit véhicule tracté (10) en outre en fonction de ladite position de référence (Y0).

**13.** Système selon l'une des revendications 8 à 12, lequel comprend en outre un inclinomètre (17) destiné à être fixé sur ledit véhicule tracté (10), et dans lequel ledit calculateur (2) comprend une troisième unité de balise (28) configurée pour recevoir des troisièmes données représentatives d'une inclinaison dudit véhicule tracté (10), depuis ledit inclinomètre (17), lesdits moyens de calcul (23) étant configurés pour calculer ledit angle de guidage en outre en fonction desdites troisièmes données.

**14.** Système selon l'une des revendications 8 à 13, lequel comprend en outre une quatrième unité de balise (29) configurée pour recevoir des informations représentatives de vitesse $(x\dot{}_1, x\dot{}_2)$ dudit véhicule tracté (10) et dudit véhicule tracteur (11), ladite unité de traitement (22) étant configurée pour déterminer ledit angle formé ($\Delta$) en outre en fonction desdites informations représentatives de vitesse $(x\dot{}_1, x\dot{}2)$.

**15.** Système selon l'une des revendications 8 à 14, dans lequel ledit premier moyen de mesure de cap (12) est destiné à être fixé sur une flèche (18) dudit véhicule tracté (10), et dans lequel ledit deuxième moyen de mesure de cap (13) est destiné à être fixé sur un essieu arrière (19) dudit véhicule tracteur (11).

**16.** Système selon l'une des revendications 8 à 15, lequel comprend en outre au moins un vérin (16) destiné à être assemblé audit essieu (14) dudit véhicule tracté (10), ledit circuit de contrôle (24) étant configuré pour contrôler ledit vérin (16).

**17.** Véhicule articulé (1) comprenant un véhicule tracteur (11) tractant un véhicule tracté (10), ledit véhicule tracté (10) présentant un essieu (14), ledit véhicule articulé (1) étant équipé d'un système selon l'une quelconque des revendications 8 à 16 pour le guidage dudit essieu (14).

[Fig.1]

[Fig.2]

[Fig.3]

[Fig.4]

[Fig.5]

[Fig. 6]

[Fig. 7]

| | Europäisches Patentamt European Patent Office Office européen des brevets | **RAPPORT DE RECHERCHE EUROPEENNE** | Numéro de la demande **EP 23 20 2908** |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/165850 A1 (CHIU JIMMY [US] ET AL) 18 juin 2015 (2015-06-18) | 1,2, 5-11,14, 16,17 | INV. B60D1/62 B62D7/15 |
| Y | * alinéas [0006], [0040], [0041], [0049], [0076], [0079], [0091], [0111], [0132], [0133]; revendications; figures * | 3,4,12, 13,15 | G08G1/16 B62D13/04 B62D13/00 |
| Y | US 2018/121742 A1 (SON JONGIN [KR] ET AL) 3 mai 2018 (2018-05-03) * alinéas [0150], [0154], [0161], [0171], [0229] - [0234], [0339]; revendications; figures * | 3,4,12, 13 | |
| Y | US 2006/229782 A1 (DENG WEIWEN [US] ET AL) 12 octobre 2006 (2006-10-12) * alinéa [0018]; revendications; figures * | 15 | |

DOMAINES TECHNIQUES RECHERCHES (IPC)

G08G
B60D
B62D

Le présent rapport a été établi pour toutes les revendications

| Lieu de la recherche | Date d'achèvement de la recherche | Examinateur |
|---|---|---|
| La Haye | 15 mars 2024 | Ducher, Alban |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

**EP 4 397 513 A1**

**ANNEXE AU RAPPORT DE RECHERCHE EUROPEENNE
RELATIF A LA DEMANDE DE BREVET EUROPEEN NO.**

EP 23 20 2908

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-03-2024

| Document brevet cité au rapport de recherche | Date de publication | Membre(s) de la famille de brevet(s) | Date de publication |
|---|---|---|---|
| US 2015165850 A1 | 18-06-2015 | AUCUN | |
| US 2018121742 A1 | 03-05-2018 | CN 108010053 A | 08-05-2018 |
| | | EP 3318469 A1 | 09-05-2018 |
| | | KR 20180048090 A | 10-05-2018 |
| | | US 2018121742 A1 | 03-05-2018 |
| US 2006229782 A1 | 12-10-2006 | AUCUN | |

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1081020 A
- EP 1449745 A
- EP 1449745 B1